# EUROPÄISCHE PATENTSCHRIFT

(11) **EP 0 972 424 B1**
(45) Veröffentlichungstag und Bekanntmachung des Hinweises auf die Patenterteilung: **23.07.2003**
(21) Anmeldenummer: 98925427.1
(22) Anmeldetag: 20.03.1998
(51) Int. Cl.: H04Q 11/04

(54) **VERFAHREN ZUM VERMITTELN VON INFORMATIONEN IN EINER ATM-VERMITTLUNGSSTELLE**
METHOD FOR DATA TRANSMISSION IN AN ATM SWITCHING CENTER
PROCEDE DE TRANSMISSION D'INFORMATIONS DANS UN CENTRAL DE COMMUTATION MTA

(30) Priorität: 24.03.1997 DE 19712259
(43) Veröffentlichungstag der Anmeldung: 19.01.2000
(73) Patentinhaber: SIEMENS AKTIENGESELLSCHAFT, 80333 München (DE)
(72) Erfinder: KOCH, Michael, D-80809 München (DE); FRANZ, Reinhard, D-81479 München (DE); HINTERBERGER, Christian, D-83607 Holzkirchen (DE); SINGER, Josef, D-86807 Buchloe (DE); GORETZKI, Manfred, D-81371 München (DE)
(86) Internationale Anmeldenummer: DE9800841
(87) Internationale Veröffentlichungsnummer: WO98043394

(56) Entgegenhaltungen:
- EP-A- 0 758 174
- US-A- 5 301 189
- NAKAMURA H ET AL: "USING ATM TO CARRY VERY LOW BIT-RATE MOBILE VOICE SIGNALS" 1995 FOURTH IEEE INTERNATIONAL CONFERENCE ON UNIVERSAL PERSONAL COMMUNICATIONS RECORD, GATEWAY TO THE 21ST. CENTURY TOKYO, NOV. 6 - 10, 1995, Nr. CONF. 4, 6. November 1995, Seiten 863-867, XP000690074 INSTITUTE OF ELECTRICAL AND ELECTRONICS ENGINEERS

## Beschreibung

Die Erfindung betrifft ein Verfahren zum Vermitteln von Informationen in einer ATM-Vermittlungsstelle und eine derartige ATM-Vermittlungsstelle.

Wie aus R.Händel, "Evolution der Netze mit ATM", telcom report 17 (1994), Heft 1, S.8-11, bekannt, werden zukünftige Breitbandnetze, wie z.B. das Breitband-ISDN, auf dem ATM-Prinzip aufbauen. In diesen Netzen wird eine Reihe neuer Dienste möglich sein.

Der Aufbau von digitalen Funknetzen ist in J.Oudelaar, "Evolution towards UMTS", PIMRC 94, 5th IEEE International Symp. on Personal, Indoor and Mobile Radio Communications, The Hague, NL, 18.-22. September 1994, S.852-856, und M.Lenti, H.Hageman "Paging in UMTS", RACE Mobile Telecommunications Workshop, Vol. 1, Amsterdam, NL, 17.-19. Mai 1994, S.405-410, gezeigt.

Die gegenwärtig existierenden Mobilfunksysteme wie das GSM (Global System for Mobile Communications) sind jedoch für einen ATM-Verkehr nicht ausgelegt. Auch das DECT (Digital European Cordless Telefon)-Schnurlostelephonie-System ist für einen breitbandigen ATM-Verkehr bisher nicht vorgesehen, sondern für einen schnurlosen Teilnehmeranschluß der Sprachübertragung hauptsächlich für die Anwendung in Räumen und Gebäuden konzipiert.

Aus WO 95/34977 ist eine ATM-Vermittlungseinrichtung bekannt, die eine Vermittlung von ATM-Minizellen vornehmen kann. Diese ATM-Minizellen sind besser als ATM-Zellen für die Sprachübertragung geeignet. Die Einführung einer solchen ATM-Vermittlungseinrichtung auf ATM-Minizellenbasis erfordert jedoch große wirtschaftliche Aufwendungen.

Eine ähnliche Vermittlungseinrichtung für Pakete kurzer Länge, die kürzer als ATM-Zellen sind, ist aus US 5 301 189 bekannt.

Aus EP 0758 174 A ist eine ATM-Kommunikationsnetzwerk bekannt. Im "Mobile Gateway Switching Center" als Anschluß zum Festnetz und in den Basisstationen werden von den Kommunikationsendgeräten gesendete Daten in Pakete kurzer Länge eingeteilt und diese Pakete kurzer Länge in gewöhnliche ATM-Zellen eingebettet. Zwischen dem "Mobile Gateway Switching Center" und den Basisstationen sind notwendige ATM-Vermittlungsstellen auf ATM-Zellen-Basis angeordnet. Das ATM-Kommunikationsnetzwerk erfordert jedoch große wirtschaftliche Investitionen.

Aus Nakamura et al.: "Using ATM to carry very low bit-rate mobile voice signals"1995 4^{th} IEEE International Conference on Universal Personal Communications Record, 6.-10.11.1995, Nr. Conf. 4, Seiten 863-867, Institute of Electrical and Electronics Engineers, ist ebenfalls die Einteilung Pakete kurzer Länge und die Einbettung Pakete kurzer Länge in gewöhnliche ATM-Zellen bekannt.

Der Erfindung liegt deshalb die Aufgabe zugrunde, ein Verfahren und eine ATM-Vermittlungsstelle anzugeben, die eine wirtschaftliche Migration von bestehenden Kommunikationsnetzen zu zukünftigen Kommunikationsnetzen mit ATM-Minizellen ermöglichen. Diese Aufgabe wird durch das Verfahren mit den Merkmalen des Patentanspruchs 1 und die ATM-Vermittlungsstelle mit den Merkmalen des Patentanspruchs 8 gelöst. Vorteilhafte Weiterbildungen sind den Unteransprüchen zu entnehmen.

Das erfindungsgemäße Verfahren zum Vermitteln von Informationen wird in einer ATM-Vermittlungsstelle realisiert, die eine ATM-Vermittlungseinrichtung für ATM-Zellen mehrerer virtueller Kanäle und mindesten zwei Vermittlungseinrichtungen für ATM-Minizellen enthält. In den Vermittlungseinrichtungen für ATM-Minizellen werden Informationen von individuellen Verbindungen jeweils einer ATM-Minizelle zugeteilt, wobei die ATM-Minizellen in ATM-Zellen eingebettet werden, so daß die Informationen der individuellen Verbindungen durch diese ATM-Zellen in virtuellen Kanälen von der ATM-Vermittlungseinrichtung vermittelt werden.

Damit können als ATM-Vermittlungseinrichtung bekannte ATM-Busstrukturen oder Einrichtungen, wie EWSX oder SSNC der Siemens AG, eingesetzt und gleichzeitig die Vorteile der ATM-Minizellen genutzt werden. Durch das zweistufige Durchschalten der Informationen der individuellen Verbindungen, die Sprachinformationen, digitale Daten oder auch Signalisierungsinformationen darstellen können, und die Funktionsaufteilung zwischen der ATM-Vermittlungseinrichtung und den Vermittlungseinrichtungen für ATM-Minizellen wird eine nachrüstbare und flexible Struktur geschaffen, die sich bestens für eine Migration hin zu zukünftigen Kommunikationsnetzen eignet. Auch sind höhere Übertragungsgeschwin digkeiten als bei einer reinen ATM-Minizellen-Übertragung möglich.

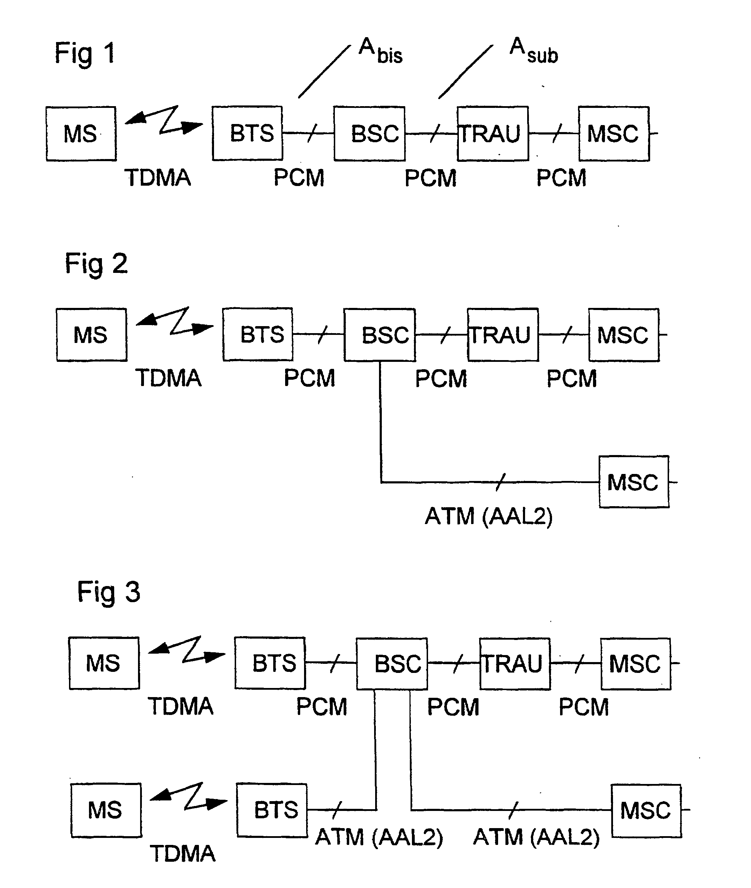

Besonders relevant ist das erfindungsgemäße Verfahren für zukünftige Mobilfunk-Standards, wie z.B. FPLMTS (Future Public Land Mobile Telecommunication System) und UMTS (Universal Mobile Telecommunication System). Diese geplanten Systeme können entsprechend den FIG 1 bis 5, wie im folgenden gezeigt, ausgestaltet werden, um einen ATM-Verkehr zu bewältigen. Ebenso ist es vorgesehen, in sogenannten Wireless Access Networks (AN), also dem Teilnehmeranschluß zu einem stationären Teilnehmer über eine Funkschnittstelle, die beispielsweise ein CDMA-Funkübertragungsverfahren anwendet, die Übertragung von ATM-Zellen mit Bitraten bis 2 Mbit/s zu ermöglichen.

Gemäß einer vorteilhaften Ausgestaltung der Erfindung werden in den Vermittlungseinrichtungen für ATM-Minizellen die ATM-Zellen ausgewertet und die Informationen der individuellen Verbindungen in den ATM-Minizelle zurückgewonnen. Durch diese Maßnahmen wird zusätzlich zur Erzeugung der ATM-Minizellen auch die Rückgewinnung der Informationen aus den ATM-Minizellen ermöglicht. Damit werden auch bidirektionale Übertragungen unterstützt.

Es ist weiterhin vorteilhaft, daß durch die Vermittlungseinrichtungen für ATM-Minizellen die Längen der ATM-Minizellen entsprechend der Verbindungen individuell einstellbar ist. Damit kann z.B. zwischen Sprach- und Signalisierungsinformationen unterschieden werden und jeweils die günstigste Zellänge für die ATM-Minizellen gewählt werden.

Nach einer weiteren vorteilhaften Ausgestaltung werden die Informationen der individuellen Verbindungen von der Vermittlungseinrichtung für ATM-Minizellen nach einem STM-Übertragungsverfahren empfangen. STM-Übertragungsverfahren, wie PCM30 - z.B. bei GSM-Mobilfunknetzen über die Abis und die Asub-Schnittstelle, PCM24, S0, PDH oder SDH können somit für einige oder alle Verbindungen weiterhin benutzt werden, währenddessen in der ATM-Vermittlungseinrichtung auf ATM-Basis vermittelt wird. Damit läßt sich die ATM-Vermittlungseinrichtung schrittweise von einer Anwendung in einer STM-Umgebung zu einer Anwendung in einer ATM-Umgebung ausbauen.

Bei entsprechenden Zellängen der ATM-Minizellen ist es vorteilhaft, daß die Informationen einer individuellen Verbindung über mehrere Empfangszeitpunkte gesammelt und dann einer ATM-Minizelle zugeteilt werden. Durch dieses Auffüllen der ATM-Minizellen wird die Übertragungskapazität besser genutzt.

Eine maximale Flexibilität wird erreicht, wenn die Einbettung der ATM-Minizellen in die ATM-Zelle unabhängig vom Zellraster der ATM-Zellen ist. Damit können die ATM-Minizellen auch über die Zellgrenzen hinweg in die ATM-Zellen eingeschrieben werden. Die Verzögerungszeiten werden damit verkürzt.

Vorteilhafterweise werden durch die Vermittlungseinrichtungen für ATM-Minizellen Organisationsinformationen für die ATM-Zellen und die ATM-Minizelle erzeugt und in die einsprechenden Zellen eingebettet. Die Organisationsinformationen (Header) für die ATM-Zellen werden in der ATM-Vermittlungseinrichtung ausgewertet, um die ATM-Zelle entsprechend des virtuellen Kanals durchzuschalten. Die Organisationsinformationen für die ATM-Minizellen werden von einer ausgangsseitigen Vermittlungseinrichtung für ATM-Minizellen ausgewertet, um die Informationen der individuellen Verbindungen aus den ATM-Minizellen wieder auszulesen und weiterzuleiten.

Vorteilhafte Ausprägungen der Erfindung sehen vor, das die ATM-Vermittlungsstelle als Basisstationscontroller eines Mobilfunknetzes oder als Netzkonzentrator eines Access-Netzwerkes ausgeprägt ist. Bei diesen Netzen wurden bereits große Investitionen in die Netzinfrastruktur gemacht, so daß eine schrittweise Anpassung an eine ATM-Übertragung von größter Bedeutung ist.

Sind die Vermittlungseinrichtungen für ATM-Minizellen als periphere Baugruppen, als sogenannte Line Interface Cards (LIC) bekannt, ausgebildet, dann kann durch eine frei gewählte Kombination verschieden Line Interface Cards für ATM- oder STM-Übertragungsverfahren den konkreten Anforderungen an die ATM-Vermittlungsstelle entsprochen werden.

Im folgenden wird die Erfindung anhand von Ausführungsbeispielen bezugnehmend auf zeichnerische Darstellungen näher erläutert.

Dabei zeigen
- Fig 1: eine schematische Darstellungen der Schnittstellen eines Mobilfunknetzes nach dem Stand der Technik,
- Fig 2: eine schematische Darstellungen der Schnittstellen eines Mobilfunknetzes mit einer ATM-Verbindung zwischen Basisstationscontroller und Mobilvermittlungsstelle,
- Fig 3: eine schematische Darstellungen der Schnittstellen eines Mobilfunknetzes mit einer ATM-Verbindung zwischen Basisstationscontroller und Mobilvermittlungsstelle bzw. Basisstation,
- Fig 4: eine schematische Darstellungen der Schnittstellen eines Mobilfunknetzes mit einer ATM-Verbindung einer Mobilvermittlungsstelle an ein ATM-Netz,
- Fig 5: eine schematische Darstellungen der Schnittstellen eines Mobilfunknetzes mit einer ATM-Verbindung einer Mobilvermittlungsstelle an ein ATM-Netz und einer Basisstation mit UMTS-Funkschnittstelle,
- Fig 6: eine schematische Darstellungen einer ATM-Vermittlungsstelle, und
- Fig 7: einen virtuellen Kanal mit ATM-Zellen und ATM-Minizellen.

In Fig. 1 sind Einrichtungen und Schnittstellen eines GSM-Mobilfunknetzes gezeigt. Zwischen einer Mobilstation MS und einer Basisstation BTS besteht eine Funkschnittstelle nach einem TDMA-Verfahren (time division multiple access). Über eine PCM (pulse code modulation) Schnittstelle Abis ist die Basisstation BTS mit einem Basisstationscontroller BSC verbunden, der Funktionen zur Steuerung und Funkressourcenverwaltung der Basisstationen ausfüllt.

Der Basisstationscontroller BSC ist über eine weitere PCM Schnittstelle Abis mit einer Transcodiereinheit TRAU verbunden, die Funktionen zur Kanalkodierung und Kanalanpassung zwischen der Basisstation BTS und einer Mobilvermittlungsstelle MSC wahrnimmt. Die Transcodiereinheit TRAU ist mit der Mobilvermittlungsstelle MSC ebenfalls über eine PCM Schnittstelle verbunden. Auch die Vernetzung von mehreren Mobilvermittlungsstellen MSC untereinander bzw. der Übergang zu anderen Kommunikationsnetzen erfolgt nach STM-Übertragungsverfahren.

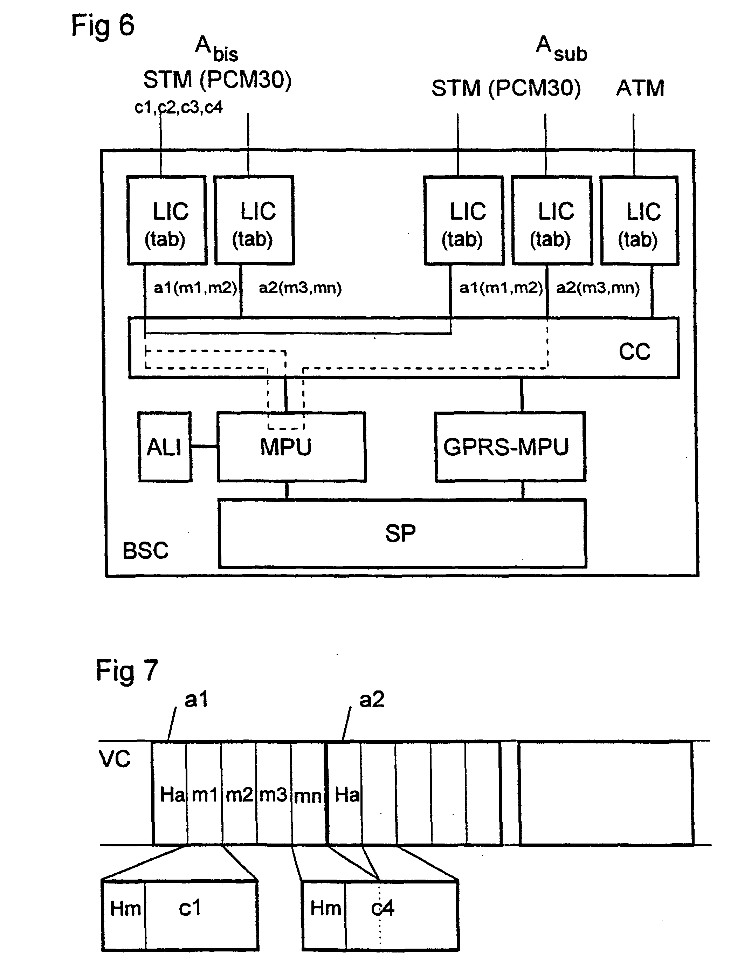

Ausgehend von dieser Netzkonfiguration wird nun eine Übertragung auf ATM-Minizellenbasis nach einem AAL2 (ATM adaptation layer 2)-Protokoll angestrebt. Dazu wird der Basisstationscontroller BSC, im weiteren ATM-Vermittlungsstelle BSC genannt, auf erfindungsgemäße Art ausgebaut. Näheres dazu in Fig. 6 und 7.

Hin zu einem zukünftigen Mobilfunknetz, beispielsweise einem UMTS-Kommunikationsnetz, sind Migrationsschritte nach den Fig. 2 bis 5 vorgesehen.

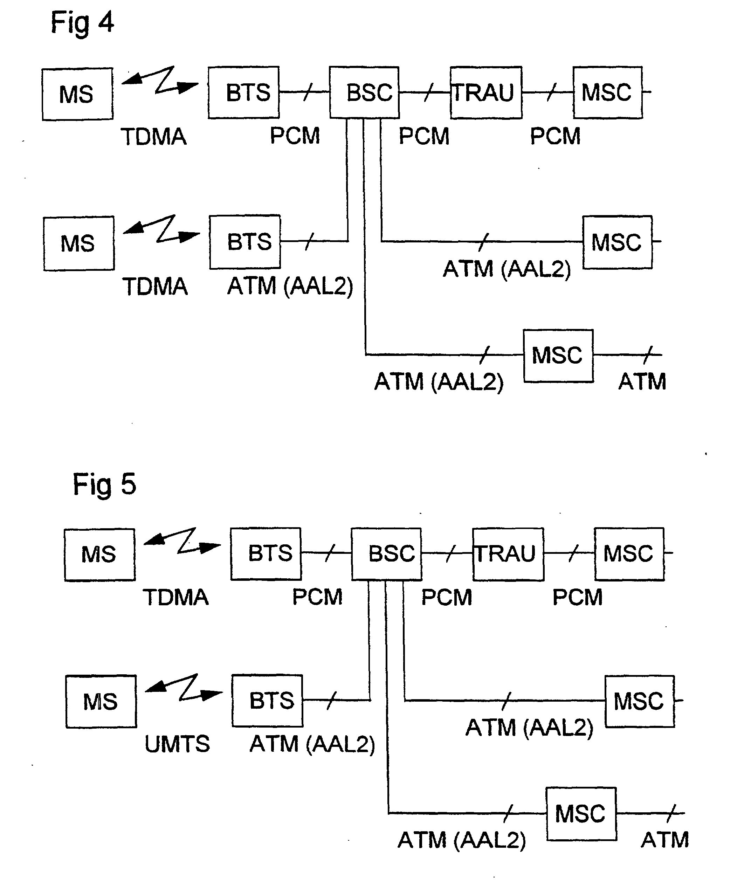

Nach Fig. 2 besteht zwischen der ATM-Vermittlungsstelle BSC und einer weiteren Mobilvermittlungsstelle MSC eine ATM-Verbindung für ATM-Minizellen ATM(AAL2). Weiterhin kann nach Fig. 3 eine Basisstation BTS über eine solche ATM-Verbindung für ATM-Minizellen ATM(AAL2) an die ATM-Vermittlungsstelle BSC angeschlossen werden. Ein weiterer Migrationsschritt ist in Fig. 4 gezeigt. Die ATM-Vermittlungsstelle BSC ist mit einer Mobilvermittlungsstelle MSC über eine ATM-Verbindung für ATM-Minizellen ATM(AAL2) verbunden, wobei diese Mobilvermittlungsstelle MSC an ein ATM-Kommunikationsnetz (backbone network) angeschlossen ist. Hierbei ist schon ein geschlossene ATM-Übertragung bis zur Funkschnittstelle möglich.

Das Mobilfunknetz nach Fig. 5 ist ein zukünftiges UMTS-Kommunikationsnetz, bei dem auch die Funkschnittstelle neu gestaltet ist, so kommt eine vorteilhafte Kombination von TDMA-, FDMA- (frequency division multiple access) und CDMA (code division multiple access) zur Teilnehmerseparierung auf der Funkschnittstelle zum Einsatz. Die erfindungsgemäße ATM-Vermittlungsstelle BSC kommt auch in diesem Szenario zum Einsatz.

Fig. 6 zeigt eine ATM-Vermittlungsstelle BSC, die eine ATM-Vennittlungseinrichtung CC, fünf Vermittlungseinrichtungen LIC für ATM-Minizellen m1, m2, m3, mn, einen Zentralprozessor MPU für eine Sprachübertragung, einen Zentralprozessor MPU-GPRS für eine Paketdatenübertragung, eine Alarmeinheit ALI und eine Speichereinheit SP enthält.

Die Vermittlungseinrichtungen LIC für ATM-Minizellen m1, m2, m3, mn sind mit der ATM-Vermittlungseinrichtung CC über ATM-Verbindungen verbunden. Zwei Vermittlungseinrichtungen LIC für ATM-Minizellen m1, m2, m3, mn - links - sind über Verbindungsleitungen nach einem STM-Übertragungsverfahren PCM30 (30 Nutzdatenkanäle mit Submultiplexing für jeweils vier individuelle Verbindungen und zwei Signalisierungskanäle) über die Abis Schnittstelle mit Basisstationen BTS verbunden. Zwei weitere ATM-Vermittlungseinrichtungen LIC für ATM-Minizellen m1, m2, m3, mn - links - sind ebenfalls über Verbindungsleitungen nach einem STM-Übertragungsverfahren PCM30 über die Asub Schnittstelle mit einer Mobilvermittlungsstelle MSC verbunden. Eine dritte solche Vermittlungseinrichtung LIC ist über eine Verbindungsleitung mit einer Mobilvermittlungsstelle MSC über eine ATM-Verbindung verbunden.

Die ATM-Vermittlungseinrichtungen LIC sind als periphere Baugruppen ausgebildet und nehmen die Anpassung der Verbindungen zu den Basisstationen BTS und den Mobilvermittlungsstellen MSC vor. Sie erzeugen ATM-Minizellen m1, m2, m3, mn und werten diese ATM-Minizellen m1, m2, m3, mn aus. Zwischen den ATM-Vermittlungseinrichtungen LIC der Abis und der Asub Schnittstelle werden durch die ATM-Vermittlungseinrichtung CC virtuelle Kanäle VC geschalten - durchgezogene Linie. Die ATM-Vermittlungseinrichtung CC schaltet die virtuellen Kanäle VC gemäß einem ATM-Multiplexing.

Desweiteren zeigt Fig. 6 Signalisierungsverbindungen - gestrichelte Linie - die zwischen den ATM-Vermittlungseinrichtungen LIC der Abis und der Asub Schnittstelle vermittelt werden oder im Zentralprozessor MPU enden. Die Vermittlung der Signalisierungsverbindungen erfolgt über die ATM-Vermittlungseinrichtung CC und den Zentralprozessor MPU. Mit der ATM-Vermittlungseinrichtung CC ist weiterhin ein Zentralprozessor MPU-GPRS für eine Paketdatenübertragung nach GPRS verbunden, der für diesen Dienst die Signalisierung durchführt. Die Zentralprozessoren nehmen die Umsetzung der Signalisierungsprotokolle LAPD auf der Abis Schnittstelle und CCS7 der Asub Schnittselle vor und benutzen das ATM-Protokoll AAL1. Sie sind weiterhin mit der durch eine Festplatte gebildeten Speichereinrichtung SP und der Alarmeinrichtung ALI verbunden. Die Festplatte SP speichert die Zuordnungsinformationen für die Signalsierung und die Alarmeinrichtung ALI wertet Fehlermeldungen aus und signalisiert diese einem Operations- und Wartungszentrum.

Die Funktion der ATM-Vermittlungseinrichtungen LIC für die Minizellen m1, m2, m3, mn mit Hilfe einer gespeicherten Zuordnungstabelle Tab wird aus der Darstellung des virtuellen Kanals VC nach Fig. 7 deutlich. In diesem virtuellen Kanal VC werden nach dem ATM-Übertragungsverfahren ATM-Zellen a1, a2 übertragen. Die Länge dieser ATM-Zellen a1, a2 ist dabei 53 Byte, wobei 5 Byte die Organisationsinformation Ha und 48 Byte die Nutzinformation darstellen. Diese ATM-Zellen a1, a2 können durch die ATM-Vermittlungseinrichtung CC auf herkömmliche Weise vermittelt werden.

In den ATM-Zellen a1, a2 sind im Teil der Nutzinformationen ATM-Minizellen m1, m2, m3, mn enthalten, die wiederum aus Organisationsinformationen Hm und Nutzinformationen c1 bestehen. Diese Nutzinformationen c1 sind die Informationen einer individuellen Verbindung, die über die STM oder ATM-Verbindungen von den Basisstationen BTS bzw. Mobilvermittlungsstellen MSC bei der ATM-Vermittlungsstelle BSC eintreffen bzw. dorthin gesendet werden.

In den ATM-Vermittlungseinrichtungen LIC erfolgt die Formatumwandlung der Informationen c1, c2, c3, c4 der individuellen Verbindungen, beispielsweise der vier Submultiplexkanäle einer der 30 PCM Kanäle, in ATM-Minizellen m1, m2, m3, mn, sowie die Einbettung der ATM-Minizellen m1, m2, m3, mn in ATM-Zellen a1, a2 zur Übertragung an die ATM-Vermittlungseinrichtung CC bzw. die Rückgewinnung der Informationen c1, c2, c3, c4 aus den von der ATM-Vermittlungseinrichtung CC empfangenen ATM-Zellen a1, a2.

Die ATM-Vermittlungseinrichtung LIC empfängt Informationen c1, c2, c3, c4, beispielsweise jeweils 2 Bit in einem Zeitschlitz der PCM 30 Verbindung von vier Kommunikationsverbindungen. Für diese vier Kommunikationsverbindungen wird jeweils eine charakteristische Organisationsinformation Hm der ATM-Minizellen m1, m2, m3, mn erzeugt, die während der Verbindung benutzt wird. Die Länge der Nutzinformationen ist beispielsweise 1 Byte = 8 Bit, so daß jeweils die Informationen c1 von vier aufeinanderfolgenden Zeitschlitzen einer Kommunikationsverbindung gesammelt und mit Hilfe der Zuordnungstabelle Tab in eine ATM-Minizelle m1 geschrieben werden.

Das Auffüllen der ATM-Zelle a1 erfolgt mit Hilfe der Zuordnungstabelle Tab durch Einschreiben von mehreren ATM-Minizellen m1, m2, m3, mn in die ATM-Zelle a1. Um die für die Sprachübertragung bedeutsame Verzögerung der Informationen gering zu halten, muß gewährleistet sein, daß in geringen Abständen eine ATM-Zelle a1 für die Informationen c1, c2, c3, c4 übertragen wird.

Die Länge der ATM-Minizellen m1, m2, m3, mn wird durch die ATM-Vermittlungseinrichtungen LIC eingestellt und durch eine Längenbezeichnung in den Organisationsinformationen Hm angegeben, so können für Sprachverbindungen und Signalisierungsverbindungen unterschiedliche Zellängen verwendet werden. Weiterhin ist bei Auffüllen der ATM-Zelle a1, a2 durch die ATM-Minizellen m1, m2, m3, mn ein Überschreiten von Zellgrenzen möglich. Eine ATM-Minizelle mn kann auch in zwei ATM-Zellen a1 und a2 übertragen werden.

## Patentansprüche

1. Verfahren zum Vermitteln von Informationen individueller Verbindungen (c1, .., c4) in einer ATM-Vermittlungsstelle (BSC), die eine ATM-Vermittlungseinrichtung (CC) für ATM-Zellen (a1, a2) mehrerer virtueller Kanäle (VC) enthält, **dadurch gekennzeichnet,**
**dass** die ATM-Vermittlungsstelle (BSC) mindestens zwei Vermittlungseinrichtungen (LIC) für Organisationsinformationen (Hm) aufweisende ATM-Minizellen (m1, m2, ..mn) enthält,
in den Vermittlungseinrichtungen (LIC) für ATM-Minizellen (m1, m2, ..mn):
jeweils Informationen der individuellen Verbindungen (c1, .., c4) ATM-Minizellen (m1, m2, ..mn) zugeteilt werden,
die ATM-Minizellen (m1, m2, ..mn) basierend auf den Organisationsinformationen (Hm) durchgeschaltet werden, und
ATM-Minizellen (m1, m2, ..mn) in ATM-Zellen (a1, a2) eingebettet werden,
in der ATM-Vermittlungseinrichtung (CC):
die ATM-Zellen (a1, a2) in virtuellen Kanälen (VC) vermittelt werden.

2. Verfahren nach Anspruch 1, bei dem
in den Vermittlungseinrichtungen (LIC) für ATM-Minizellen (m1, m2, ..mn) die ATM-Zellen (a1, a2) ausgewertet werden und die Informationen der individuellen Verbindungen (c1, .., c4) in den ATM-Minizellen (m1, m2, ..mn) zurückgewonnen werden.

3. Verfahren nach Anspruch 1 oder 2, bei dem
durch die Vermittlungseinrichtungen (LIC) für ATM-Minizellen (m1, m2, ..mn) die Längen der ATM-Minizellen (m1, m2, ..mn) entsprechend der Verbindungen (c1, .., c4) individuell einstellbar ist.

4. Verfahren nach einem der vorhergehenden Ansprüche, bei dem die Informationen der individuellen Verbindungen (c1, .., c4) von der Vermittlungseinrichtung (LIC) für ATM-Minizellen (m1, m2, ..mn) nach einem STM-Übertragungsverfahren empfangen werden.

5. Verfahren nach Anspruch 4, bei dem
die Informationen einer individuellen Verbindung (c1) über mehrere Empfangszeitpunkte gesammelt und dann einer ATM-Minizelle (m1, m2, ..mn) zugeteilt werden.

6. Verfahren nach einem der vorhergehenden Ansprüche, bei dem die Einbettung der ATM-Minizellen (m1, m2, ..mn) in die ATM-Zelle (a1, a2) unabhängig vom Zellraster der ATM-Zellen (a1, a2) ist.

7. Verfahren nach einem der vorhergehenden Ansprüche, bei dem durch die Vermittlungseinrichtungen (LIC) für ATM-Minizellen (m1, m2, ..mn) Organisationsinformationen (Ha, Hm) für die ATM-Zellen (a1, a2) und für die ATM-Minizellen (m1, m2, ..mn) erzeugt und in die entsprechenden Zellen (a1, a2, m1, m2, ..mn) eingebettet werden.

8. ATM-Vermittlungsstelle (BSC) mit
einer ATM-Vermittlungseinrichtung (CC) zum Vermitteln von ATM-Zellen (a1, a2) mehrerer virtueller Kanäle (VC) **dadurch gekennzeichnet,**
**dass** die ATM-Vermittlungsstelle (BSC) mindestens zwei Vermittlungseinrichtungen (LIC) für Organisationsinformationen (Hm) aufweisende ATM-Minizellen (m1, m2, ..mn)
zur Zuteilung von Informationen von individuellen Verbindungen (c1, .., c4) zu ATM-Minizellen (m1, m2, ..mn),
zum Durchschalten der ATM-Minizellen (m1, m2, ..mn) basierend auf den Organisationsinformationen (Hm) und
zum Einbetten der ATM-Minizellen (m1, m2, ..mn) in ATM-Zellen (a1, a2)
enthält, und
**dass** die ATM-Vermittlungseinrichtung (CC) zur Vermittlung der ATM-Zellen (a1, a2) in virtuellen Kanälen (VC) vorgesehen ist.

9. ATM-Vermittlungsstelle (BSC) nach Anspruch 8, bei der die Vermittlungseinrichtungen (LIC) für ATM-Minizellen (m1, m2, ..mn) als periphere Einrichtung der Vermittlungseinrichtung (CC) ausgeprägt sind.

10. ATM-Vermittlungsstelle (BSC) nach Anspruch 8 oder 9, mit den Vermittlungseinrichtungen (LIC) für ATM-Minizellen (m1, m2, ..mn) zur Umsetzung von Informationen individueller Verbindungen (c1, .., c4) von einem STM-Übertragungsverfahren in ein ATM-Übertragungsverfahren.

11. ATM-Vermittlungsstelle (BSC) nach einem der Ansprüche 9 oder 10, bei der periphere Baugruppen (LIC) zum Empfang von Informationen nach dem STM-Übertragungsverfahren und nach dem ATM-Übertragungsverfahren angeschlossen sind.

12. ATM-Vermittlungsstelle (BSC) nach einem der Ansprüche 8 bis 11, mit den Vermittlungseinrichtungen (LIC) für ATM-Minizellen (m1, m2, ..mn), die jeweils
Mittel zur Speicherung einer Zuordnungstabelle (Tab) für die Zuordnung von jeweils einer individuellen Verbindung zu einer Organisationsinformation (Hm) für ATM-Minizellen (m1, m2, ..mn) und
Mittel zur Auswertung der Zuordnungs-tabelle (Tab) aufweisen.

13. ATM-Vermittlungsstelle (BSC) nach einem der Ansprüche 8 bis 12, die als Basisstationscontroller eines Mobilfunknetzes ausgeprägt ist.

14. ATM-Vermittlungsstelle (BSC) nach einem der Ansprüche 8 bis 12, die als Netzkonzentrator eines Access-Netzwerkes ausgeprägt ist.

## Claims

1. Method for transmitting information of individual connections (c1, .., c4) in an ATM switching centre (BSC) which contains an ATM transmitting device (CC) for ATM cells (a1, a2) on a plurality of virtual channels (VC),
**characterized**
**in that** the ATM switching centre (BSC) contains at least two transmitting devices (LIC) for ATM minicells (m1, m2, ..mn) having organization information (Hm),
in the transmitting devices (LIC) for ATM minicells (m1, m2, ..mn):
information of the individual connections (c1, .., c4) is in each case assigned to ATM minicells (m1, m2, ..mn),
the ATM minicells (m1, m2, ..mn) are passed on based on the organization information (Hm), and
ATM minicells (m1, m2, ..mn) are embedded in ATM cells (a1, a2),
in the ATM transmitting device (CC):
the ATM cells (a1, a2) are transmitted in virtual channels (VC).

2. Method according to Claim 1, in which
the ATM cells (a1, a2) are evaluated in the transmitting devices (LIC) for ATM minicells (m1, m2, ..mn), and the information of the individual connections (c1, .., c4) is recovered in the ATM minicells (m1, m2, ..mn).

3. Method according to Claim 1 or 2, in which the lengths of the ATM minicells (m1, m2, ..mn) can be set individually corresponding to the connections (c1, .., c4) by the transmitting devices (LIC) for ATM minicells (m1, m2, ..mn).

4. Method according to one of the preceding claims, in which the information of the individual connections (c1, .., c4) is received from the transmitting device (LIC) for ATM minicells (m1, m2, ..mn) using an STM transmission method.

5. Method according to Claim 4, in which
the information of an individual connection (c1) is gathered over a plurality of receiving times, and is then assigned to an ATM minicell (m1, m2, ..mn).

6. Method according to one of the preceding claims, in which
the ATM minicells (m1, m2, ..mn) are embedded in the ATM cell (a1, a2) independently of the cell grid of the ATM cells (a1, a2).

7. Method according to one of the preceding claims, in which
organization information (Ha, Hm) for the ATM cells (a1, a2) and for the ATM minicell (m1, m2, ..mn) is produced by the transmitting devices (LIC) for ATM minicells (m1, m2, ..mn), and is embedded in the corresponding cells (a1, a2, m1, m2, ..mn).

8. ATM switching centre (BSC) having
an ATM transmitting device (CC) for transmitting ATM cells (a1, a2) of a plurality of virtual channels (VC)
**characterized**
**in that** the ATM switching centre (BSC) contains at least two transmitting devices (LIC) for ATM minicells (m1, m2, ..mn) having organization information (Hm)
for assignment of information from individual connections (c1, .., c4) to ATM minicells (m1, m2, ..mn),
for passing on the ATM minicells (m1, m2, ..mn) based on the organization information (Hm), and
for embedding the ATM minicells (m1, m2, ..mn) in ATM cells (a1, a2),
and **in that** the ATM transmitting device (CC) is intended for transmitting the ATM cells (a1, a2) in virtual channels (VC).

9. ATM switching centre (BSC) according to Claim 8, in which
the transmitting devices (LIC) for ATM minicells (m1, m2, ..mn) are in the form of a peripheral device of the transmitting device (CC).

10. ATM switching centre (BSC) according to Claim 8 or 9, having the transmitting devices (LIC) for ATM minicells (m1, m2, ..mn) for conversion of information of individual connections (c1, .., c4) from an STM transmission method to an ATM transmission method.

11. ATM switching centre (BSC) according to one of Claims 9 or 10, in which peripheral assemblies (LIC) are connected in order to receive information using the STM transmission method and using the ATM transmission method.

12. ATM switching centre (BSC) according to one of Claims 8 to 11, having the switching devices (LIC) for ATM minicells (m1, m2, ..mn), which in each case have
means for storing an assignment table (Tab) for the assignment of in each case one individual connection to organization information (Hm) for ATM minicells (m1, m2, ..mn) and
means for evaluating the assignment table (Tab).

13. ATM switching centre (BSC) according to one of claims 8 to 12, which is in the form of a base station controller of a mobile radio network.

14. ATM switching center (BSC) according to one of Claims 8 to 12, which is in the form of a network concentrator of an access network.

## Revendications

1. Procédé de transmission d'informations de liaisons individuelles (c1, ..., c4) dans un central de commutation ATM (BSC) qui comprend un dispositif de commutation ATM (CC) pour des cellules ATM (a1, a2) de plusieurs canaux virtuels (VC),
**caractérisé en ce que**
le central de commutation ATM (BSC) comprend au moins deux dispositifs de commutation (LIC) pour des mini-cellules ATM (m1, m2, ..., mn) présentant des informations d'organisation (Hm),
**en ce que** dans les dispositifs de commutation (LIC) pour les mini-cellules ATM (m1, m2, ...mn):
des informations respectives des liaisons individuelles (c1, ..., c4) sont attribuées aux mini-cellules ATM (m1, m2, ...mn),
les mini-cellules ATM (m1, m2, ...mn) sont commutées sur la base des informations d'organisation (Hm), et
des mini-cellules ATM (m1, m2, ...mn) sont insérées dans des cellules ATM (a1, a2),
**en ce que** dans le dispositif de commutation ATM (CC) :
les cellules ATM (a1, a2) sont commutées dans des canaux virtuels (VC).

2. Procédé selon la revendication 1, dans lequel
les cellules ATM (a1, a2) sont analysées dans les dispositifs de commutation (LIC) pour les mini-cellules ATM (m1, m2, ...mn) et les informations des liaisons individuelles (c1, ..., c4) sont récupérées dans les mini-cellules ATM (m1, m2, ...mn).

3. Procédé selon la revendication 1 ou 2, dans lequel
les longueurs des mini-cellules ATM (m1, m2, ...mn) sont réglables individuellement de manière correspondant aux liaisons (c1,..., c4) au moyen des dispositifs de commutation (LIC) pour les mini-cellules ATM (m1, m2, ...mn).

4. Procédé selon l'une quelconque des revendications précédentes, dans lequel
les informations des liaisons individuelles (c1, ..., c4) sont reçues par le dispositif de commutation (LIC) pour les mini-cellules ATM (m1, m2, ...mn) suivant un procédé de transmission STM.

5. Procédé selon la revendication 4, dans lequel
les informations d'une liaison individuelle (c1) sont regroupées par l'intermédiaire de plusieurs moments de réception et sont ensuite attribuées à une mini-cellule ATM (m1, m2, ...mn).

6. Procédé selon l'une quelconque des revendications précédentes, dans lequel l'insertion des mini-cellules ATM (m1, m2, ...mn) dans la cellule ATM est indépendante de la trame de cellules des cellules ATM (a1, a2).

7. Procédé selon l'une quelconque des revendications précédentes, dans lequel des informations d'organisation (Ha, Hm) sont créées pour les cellules ATM (a1, a2) et pour les mini-cellules ATM (m1, m2, ...mn) au moyen des dispositifs de commutation (LIC) pour les mini-cellules ATM (m1, m2, ...mn) et sont insérées dans les cellules correspondantes (a1, a2, m1, m2, ...mn).

8. Central de commutation ATM (BSC) avec
un dispositif de commutation ATM (CC) pour la commutation de cellules ATM (a1, a2) de plusieurs canaux virtuels (VC),
**caractérisé en ce que**
le central de commutation ATM (BSC) comprend au moins deux dispositifs de commutation (LIC) pour des mini-cellules ATM (m1, m2, ..mn) présentant des informations d'organisation (Hm)
pour l'attribution d'informations de liaisons individuelles (c1, ..., c4) à des mini-cellules ATM (m1, m2, ...mn),
pour la commutation des mini-cellules ATM (m1, m2, ...mn) sur la base des informations d'organisation (Hm) et
pour l'insertion des mini-cellules ATM (m1, m2, ...mn) dans les cellules ATM (a1, a2)
et,
**en ce que** le dispositif de commutation ATM (CC) est prévu pour la commutation des cellules ATM (a1, a2) dans des canaux virtuels (VC).

9. Central de commutation ATM (BSC) selon la revendication 8, dans lequel les dispositifs de commutation (LIC) pour les mini-cellules ATM (m1, m2, ...mn) sont conçus comme dispositif périphérique du dispositif de commutation (CC).

10. Central de commutation (BSC) selon la revendication 8 ou 9, avec les dispositifs de commutation (LIC) pour les mini-cellules ATM (m1, m2, ...mn) pour la conversion d'informations de liaisons individuelles (c1, ..., c4) d'un procédé de transmission STM en un procédé de transmission ATM.

11. Central de commutation ATM (BSC) selon l'une des revendications 9 ou 10, dans lequel des sous-groupes périphériques (LIC) sont raccordés pour la réception d'informations suivant le procédé de transmission STM et suivant le procédé de transmission ATM.

12. Central de commutation ATM (BSC) selon l'une des revendications 8 à 11, avec les dispositifs de commutation (LIC) pour les mini-cellules ATM (m1, m2, ...mn) qui
présentent respectivement des moyens pour la mémorisation d'un tableau d'affectation (Tab) pour l'attribution d'une liaison individuelle respective à une information d'organisation (Hm) pour les mini-cellules ATM (m1, m2, ...mn) et des moyens d'analyse du tableau d'affectation (Tab).

13. Central de commutation ATM (BSC) selon l'une des revendications 8 à 12, qui est conçu comme contrôleur de station de base d'un réseau de radiocommunication mobile.

14. Central de commutation ATM (BSC) selon l'une des revendications 8 à 12, qui est conçu comme concentrateur de réseau d'un réseau d'accès.
